# EUROPÄISCHE PATENTSCHRIFT

(11) **EP 2 782 661 B1**
(45) Veröffentlichungstag und Bekanntmachung des Hinweises auf die Patenterteilung: **11.01.2017**
(21) Anmeldenummer: 12790884.6
(22) Anmeldetag: 21.11.2012
(51) Int. Cl.: B01D 53/83, B01D 53/96, F28F 5/02, F28D 19/04

(54) **KALZINIERVORRICHTUNG ZUR ABSCHEIDUNG VON KOHLENDIOXID AUS EINEM FESTSTOFF**
CALCINATION DEVICE FOR SEPARATING CARBON DIOXIDE FROM A SOLID
DISPOSITIF DE CALCINATION PERMETTANT DE SÉPARER DU DIOXYDE DE CARBONE D'UNE MATIÈRE SOLIDE

(30) Priorität: 24.11.2011 DE 102011055678
(43) Veröffentlichungstag der Anmeldung: 01.10.2014
(73) Patentinhaber: Technische Universität Darmstadt, 64289 Darmstadt (DE)
(72) Erfinder: EPPLE, Bernd, 64395 Brensbach (DE); SEEBER, Joachim, 73249 Wernau (DE)
(74) Vertreter: Rüger, Barthelt & Abel
(86) Internationale Anmeldenummer: PCT/EP2012/073211
(87) Internationale Veröffentlichungsnummer: WO 2013/076131

(56) Entgegenhaltungen:
- EP-A1- 2 299 176
- EP-A2- 2 348 272

## Beschreibung

Die Erfindung betrifft eine Kalziniervorrichtung, die zum Abscheiden von Kohlendioxid aus einem Kohlendioxid enthaltenden rieselfähigen ersten Feststoff dient. Diese Kalziniervorrichtung kann Bestandteil einer Vorrichtung zur Trennung von Kohlendioxid aus einem Rauchgas sein, wobei diese Vorrichtung einen Karbonator und eine Brennkammer aufweist, die mit der Kalziniervorrichtung verbunden sind. Über den ersten Feststoff kann in einem Karbonator das in einem Rauchgas enthaltene Kohlendioxid vom Rauchgas getrennt und durch den ersten Feststoff adsorbiert werden. Das CO₂-freie Abgas kann anschließend gegebenenfalls über eine Wärmetauscheranordnung und/oder eine Filtereinrichtung in die Umgebung abgegeben werden. Es enthält nahezu kein Kohlendioxid, was im Hinblick auf die Anforderungen an die Klimafreundlichkeit von Feuerungsprozessen gefordert ist. Die erfindungsgemäße Kalziniervorrichtung dient im Anschluss an den Karbonator dazu, das im ersten Feststoff enthaltene Kohlendioxid wieder vom ersten Feststoff zu trennen und im Anschluss daran zu einer weiteren Verwertung zwischenzuspeichern oder auch dauerhaft zu lagern. Auf diese Weise kann Kohlendioxid mit einem sehr hohen Reinheitsgrad erhalten werden.

Aus der DE 10 2007 015 082 A1 ist ein Verfahren und eine Vorrichtung zur Abscheidung von Kohlendioxid aus Abgasen und eine Kalzinierung mittels Hochtemperaturwärmetauschern bekannt. Die Kalzinierung soll dabei in einem Hochtemperaturwärmetauscher in Flugstrom erfolgen. Beim Kalzinieren wird durch eine Temperaturerhöhung von Kalkstein auf über ca. 900°C das Kohlendioxid ausgetrieben und es entsteht gebrannter Kalk (CaO). Einzelheiten zum Aufbau der Kalziniervorrichtung mit Hochtemperaturwärmetauscher sind nicht beschrieben.

EP 2 229 176 A1 beschreibt ein Verfahren und eine Vorrichtung zur Abscheidung von CO₂ aus einem Abgas gemäß dem Oberbegriff von Anspruch 1. Ein Fließbettkühler kann die Wärme von Fließbettpartikeln aufnehmen. Diese Wärme wird über Heatpipes oder alternativ einen Regenerator auf einen Desorber übertragen. Im Desorber wid ein CO₂-tragendes Sorbens regeneriert.

EP 2 348 272 A2 beschreibt einen regenerativen Wärmetauscher zur Übertragung von Wärme zwischen zwei Feststoffen. Dabei rieselt abwechselnd ein erster Feststoff und ein zweiter Feststoff über die Wärmetauscherflächen.

Ausgehend hiervon ist es eine Aufgabe der vorliegenden Erfindung eine Kalziniervorrichtung zu schaffen, die eine hohe Effizienz aufweist und gleichzeitig einen platzsparenden Aufbau ermöglicht. Diese Aufgabe wird durch eine Kalziniervorrichtung mit den Merkmalen des Patentanspruches 1 gelöst.

Die Kalziniervorrichtung weist einen Abscheidekanal zwischen einem Kanaleinlass und einem Kanalauslass auf. Vorzugsweise verläuft der Abscheidekanal im Wesentlichen vertikal. Über den Kanaleinlass wird der Kohlendioxid enthaltende rieselfähige erste Feststoff zugeführt. Im Gehäuse der Kalziniervorrichtung benachbart zum Abscheidekanal ist ein erster Heizkanal sowie ein zweiter Heizkanal vorgesehen. Ferner enthält das Gehäuse eine erste Wärmetauschereinheit mit einer ersten Wärmetauscherfläche und eine zweite Wärmetauschereinheit mit einer zweiten Wärmetauscherfläche. Die beiden Wärmetauschereinheiten sind jeweils drehbar gelagert, wobei die Drehlagerung beispielsweise um eine gemeinsame Drehachse erfolgen kann. Die erste Wärmetauscherfläche erstreckt sich teilweise im ersten Heizkanal und teilweise in einem Abschnitt des Abscheidekanals. Die zweite Wärmetauscherfläche erstreckt sich teilweise im zweiten Heizkanal und teilweise in einem weiteren Abschnitt des Abscheidekanals. Den beiden Heizkanälen wird ein aufgeheizter zweiter rieselfähiger zweiter Feststoff zugeführt. Die beiden Heizkanäle sind im Hinblick auf die Transportrichtung des zweiten Feststoffs parallel geschaltet. Im Hinblick auf die Transportrichtung des ersten Feststoffs sind die beiden Wärmetauscheinheiten im Abscheidekanal hintereinander und sozusagen in Reihe geschaltet. Im Abscheidekanal wird die Wärme der Wärmetauscherflächen auf den ersten Feststoff zumindest teilweise übertragen. Der erste Feststoff wird im Abscheidekanal aufgeheizt, wodurch das Kohlendioxid freigesetzt wird. In den Abscheidekanal mündet zumindest ein Gasabfuhrkanal, über den das Kohlendioxid aus dem Gehäuse der Kalziniervorrichtung abgezogen werden kann. Dem Gasableitkanal können Trennmittel zugeordnet sein, um mitgeführte Partikel des ersten Feststoffs auszuscheiden und/oder vom Eintritt in den Gasableitkanal zu hindern. Vorzugsweise ist jedem Wärmetauscher ein separater Gasableitkanal zugeordnet.

Durch das Hintereinanderschalten von zwei Wärmetauschereinheiten kann eine hohe Effizienz beim Trennen des Kohlendioxids vom ersten rieselfähigen Feststoff erreicht werden. Hierfür sind beide Wärmetauschereinheiten einem gemeinsamen Abscheidekanal zugeordnet. Gleichzeitig ist jede Wärmetauschereinheit einem separaten Heizkanal zugeordnet, wobei beiden Heizkanälen ein aufgewärmter oder erhitzter zweiter rieselfähiger Feststoff zugeführt wird. Die Temperatur des zugeführten zweiten Feststoffs sowohl in dem ersten Heizkanal, als auch in dem zweiten Heizkanal ist in etwa gleich groß. Die beiden Heizkanäle sind sozusagen parallel geschaltet und werden vorzugsweise über eine gemeinsame Versorgungsleitung mit einem heißen Partikelstrom des ersten Feststoffs versorgt. Die beiden Wärmetauschereinheiten sind drehbar im Gehäuse angeordnet. Die jeweilige Drehachse verläuft im Wesentlichen in Verlaufsrichtung des Abscheidekanals und bei einem Ausführungsbeispiel im Wesentlichen vertikal. Vorzugsweise können die Wärmetauscherflächen der beiden Wärmetauschereinheiten unabhängig voneinander um die jeweilige Drehachse gedreht werden, wofür jeder Wärmetauschereinheit ein separater Antrieb zugeordnet ist. Da die Wärmetauscherflächen im Abscheidekanal hintereinander geschaltet sind, kann es notwendig sein, die Drehstellung der beiden Wärmetauschereinheiten unterschiedlich oft zu verändern. Vorzugsweise kann die Menge von aufgeheiztem zweitem Feststoff, die dem ersten Heizkanal und dem zweiten Heizkanal zugeführt wird unabhängig voneinander vorgegeben und eingestellt werden. Die im Heizkanal befindlichen Teile der ersten bzw. zweiten Wärmetauscherfläche können auf diese Weise bedarfsgemäß aufgewärmt werden.

Vorteilhafterweise verlaufen die beiden Heizkanäle und der Abscheidekanal parallel zueinander und im Wesentlichen vertikal. Durch die vertikale Ausrichtung kann der rieselfähige Feststoff ohne ein zusätzliches Fördermedium aufgrund seiner Gewichtskraft durch die Kalziniervorrichtung transportiert werden. Dadurch wird für den Transport der rieselfähigen Feststoffe innerhalb der Kalziniervorrichtung keine Energie benötigt.

Um ein möglichst klein bauendes Gehäuse zu erhalten, sind die beiden Heizkanäle vorzugsweise entlang einer gemeinsamen Achse hintereinander angeordnet. Diese Achse kann vorzugsweise vertikal ausgerichtet sein.

Die erste Wärmetauscherfläche und/oder die zweite Wärmetauscherfläche können zumindest teilweise durch die Oberfläche von jeweils mehreren Füllkörpern gebildet sein. Über solche Füllkörper lässt sich eine sehr große Wärmetauscherfläche erreichen, die eine gute Wärmeübertragung auf den ersten rieselfähigen Feststoff bzw. vom zweiten rieselfähigen Feststoff auf die Wärmetauscherfläche gewährleistet. Gleichzeitig kann durch die Ausgestaltung der Füllkörper die Größe der Durchtrittsöffnungen für den Feststoff vorgegeben werden, wodurch die Verweildauer der rieselfähigen Feststoffe beim Strömen entlang der Wärmetauscherfläche bzw. die Kontaktdauer zwischen dem Feststoff und der Wärmetauscherfläche eingestellt werden kann. Es ist dabei auch möglich, die Verweildauer der beiden Wärmetauscherflächen unterschiedlich groß vorzugeben.

Als erster Feststoff kann beispielsweise ein erdalkalisches Sorbens dienen, wie zum Beispiel Calciumoxid (CaO) oder Magnesiumoxid (MgO). Als zweiter Feststoff wird ein unter den gegebenen Bedingungen innerter Feststoff verwendet, vorzugsweise Sand.

Die Kalziniervorrichtung kann Bestandteil einer Vorrichtung zur Trennung von Kohlendioxid aus einem Rauchgas sein. Diese Vorrichtung weist eine Brennkammer auf, in der durch Verbrennung eines Brennstoffes mit Luft Kohlendioxid enthaltendes Rauchgas entsteht. Der zweite Feststoff wird durch die Wärme der Brennkammer erhitzt. In einem Karbonator wird der erste Feststoff in Kontakt mit dem Kohlendioxid enthaltenden Rauchgas gebracht und adsorbiert das Kohlendioxid im Rauchgas. Dieser Kohlendioxid enthaltende erste Feststoff wird anschließend der Kalziniervorrichtung zugeführt, wo im Abscheidekanal das Kohlendioxid wieder vom ersten Feststoff getrennt wird. Der erste Feststoff wird nach der Abscheidung des Kohlendioxids wieder dem Karbonator zugeführt. Der in der Kalziniervorrichtung abgekühlte zweite Feststoff wird anschließend wieder zur Brennkammer transportiert, um erneut aufgeheizt zu werden. Es entstehen somit zwei getrennt voneinander umlaufende Feststoffströme.

Vorteilhafte Ausgestaltungen der Erfindung ergeben sich aus den abhängigen Patentansprüchen sowie der Beschreibung. Die Beschreibung beschränkt sich auf wesentliche Merkmale der Erfindung sowie sonstige Gegebenheiten. Die Zeichnung ist ergänzend heranzuziehen. Es zeigen:
Figur 1 ein Blockschaltbild eines Ausführungsbeispiels einer Vorrichtung zur Trennung von Kohlendioxid aus einem Rauchgas mit einer Brennkammer, einem Karbonator und einer Kalziniervorrichtung,
Figur 2 eine schematische Darstellung eines Ausführungsbeispiels einer Kalziniervorrichtung im Längsschnitt,
Figur 3 ein Querschnitt durch die Kalziniervorrichtung aus Figur 2 gemäß Schnittlinie A-A,
Figur 4 ein Querschnitt durch die Kalziniervorrichtung aus Figur 2 gemäß Schnittlinie B-B,
Figur 5 einen Querschnitt durch die Kalziniervorrichtung aus Figur 2 gemäß Schnittlinie C-C,
Figur 6 ein erstes Ausführungsbeispiel einer Wärmetauscherfläche in stark schematisierter Teildarstellung,
Figur 7 ein zweites Ausführungsbeispiel einer Wärmetauscherfläche in stark schematisierter Teildarstellung,
Figur 8 ein drittes Ausführungsbeispiel einer Wärmetauscherfläche in stark schematisierter Teildarstellung mit Füllkörpern,
Figur 9 ein viertes Ausführungsbeispiel der Wärmetauscherfläche in stark schematisierter Teildarstellung mit einer gitterartigen Struktur,
Figur 10 kugelförmige Füllkörper für eine Wärmetauscherfläche mit Abstandhaltemitteln in Form von Stiften und
Figur 11 kugelförmige Füllkörper für eine Wärmetauscherfläche mit Durchgangslöchern und
Figur 12 ein Blockschaltbild eines zweiten Ausführungsbeispiels einer Vorrichtung zur Trennung von Kohlendioxid aus einem Rauchgas.

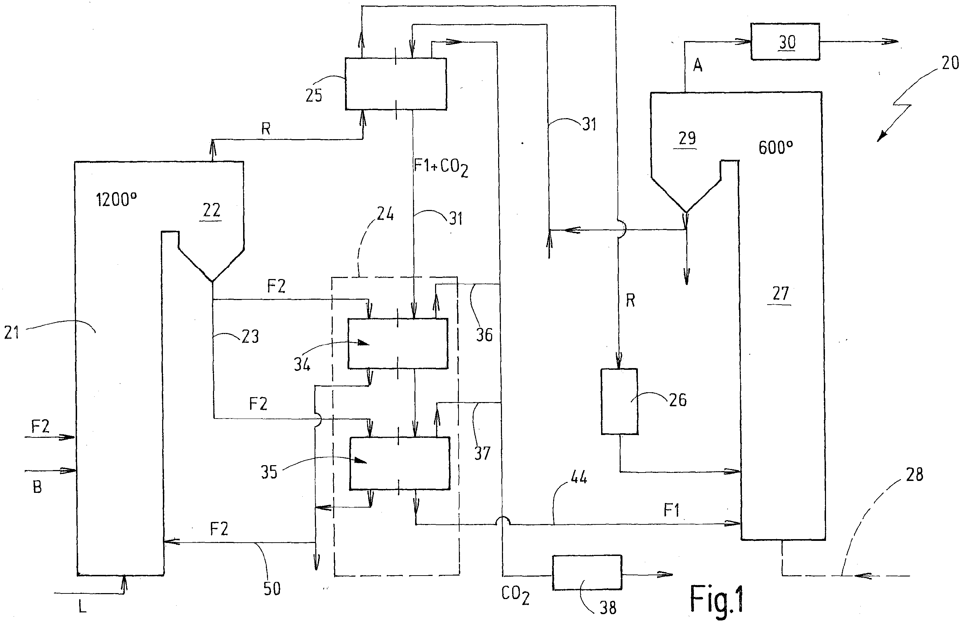

In Figur 1 ist ein Blockschaltbild eines ersten Ausführungsbeispiels einer Vorrichtung 20 dargestellt, die Teil einer Kraftwerksanlage sein kann. Die Vorrichtung 20 dient zur Durchführung eines Prozesses mit dem Kohlendioxid (CO₂) aus einem kohlendioxidhaltigen Rauchgas R entfernt werden kann. Die Vorrichtung 20 weist eine Brennkammer 21, beispielsweise eine Dampferzeugerfeuerung auf. Bei der Brennkammer 21 handelt es sich beispielsweise um eine Wirbelschichtfeuerung, in der ein Brennstoff B gemeinsam mit Luft L verbrannt wird. Das dabei entstehende Rauchgas R enthält Kohlendioxid. Der Brennkammer 21 wird ein zweiter Feststoff F2 zugeführt und in der Brennkammer erhitzt. In einem der Brennkammer 21 nachgeschalteten Abscheider 22 wird der zweite Feststoff F2 vom Rauchgas R getrennt. Der zweite Feststoff F2 wird über eine Versorgungsleitung 23 einer Kalziniervorrichtung 24 zugeführt.

Das aus dem Abscheider 22 abgeführte Rauchgas R wird über einen optionalen Wärmetauscher 25 und eine Rauchgasreinigungseinheit 26 einem Karbonator 27 zugeführt. Der Karbonator 27 ist beim Ausführungsbeispiel als Wirbelschichtreaktor ausgeführt. Aus der Kalziniervorrichtung 24 wird dem Karbonator 27 des Weiteren ein erhitzter Massenstrom eines ersten Feststoffes F1 zugeführt. Im Karbonator gelangt der erste Feststoff F1 in Kontakt mit dem Kohlendioxid enthaltendem Rauchgas R und adsorbiert das im Rauchsgas R enthaltene Kohlendioxid. Dem Karbonator 27 kann optional auch ein Rauchgasstrom von einem anderen Kraftwerksprozessprozess zugeführt werden, wie dies schematisch durch die gestrichelte Leitung 28 dargestellt ist.

Zur Trennung der Feststoffpartikel des ersten Feststoffes F1 vom nunmehr kohlendioxidreduzierten Gas, das zur Unterscheidung mit dem Kohlendioxid enthaltenden Rauchgas R als Abgas A bezeichnet wird, ist dem Karbonator 27 ein Abscheider 29 nachgeschaltet. Die beiden Abscheider 22, 29 können beispielsweise als Zyklonabscheider ausgeführt sein. Das vom Kohlendioxid befreite Abgas A kann über eine Abgasreinigungseinheit 30 aus dem Abscheider 29 abgeführt werden.

Die beiden Feststoffe F1 und F2 sind in kleine Partikel zerkleinert, die vorzugsweise eine mittlere Korngröße von kleiner als einem Millimeter aufweisen. Bei dieser Kerngröße lassen sich gute Wirbelschichten in der Brennkammer 21 bzw. dem Karbonator 27 ausbilden und die Kontaktfläche zwischen den Feststoffpartikeln der beiden Feststoffe F1, F2 und dem betreffenden Gas ist ausreichend groß.

Der erste Feststoff F1 aus dem Abscheider 29 wird zusammen mit dem darin enthaltenen Kohlendioxid über eine Zufuhrleitung 31 der Kalziniervorrichtung 24 zugeführt. Dies geschieht entweder direkt oder wie beim bevorzugten Ausführungsbeispiel nach Figur 1 über einen zur Vorwärmung des kohlendioxidhaltigen ersten Feststoffes F1 dienenden ersten Wärmetauscher 25.

Die Kalziniervorrichtung 24 weist beim Ausführungsbeispiel eine erste Wärmetauschereinheit 34 und eine zweite Wärmetauschereinheit 35 auf. Über die Wärmetauschereinheiten 34, 35 wird in der Kalziniervorrichtung 24 den Strom des zweiten Feststoffes F2 Wärme entnommen und dem Strom des Kohlendioxid enthaltenden ersten Feststoffes F1 Wärme zugeführt. Bei dieser Erwärmung oder Erhitzung des ersten Feststoffes F1 wird das enthaltene Kohlendioxid frei und über einen und beispielsgemäß zwei Gasableitkanäle 36, 37 aus der Kalziniervorrichtung 27 entfernt. Das abgeführte Kohlendioxid kann im Anschluss abgekühlt und gereinigt werden, wofür entsprechende Mittel 38 vorgesehen sein können.

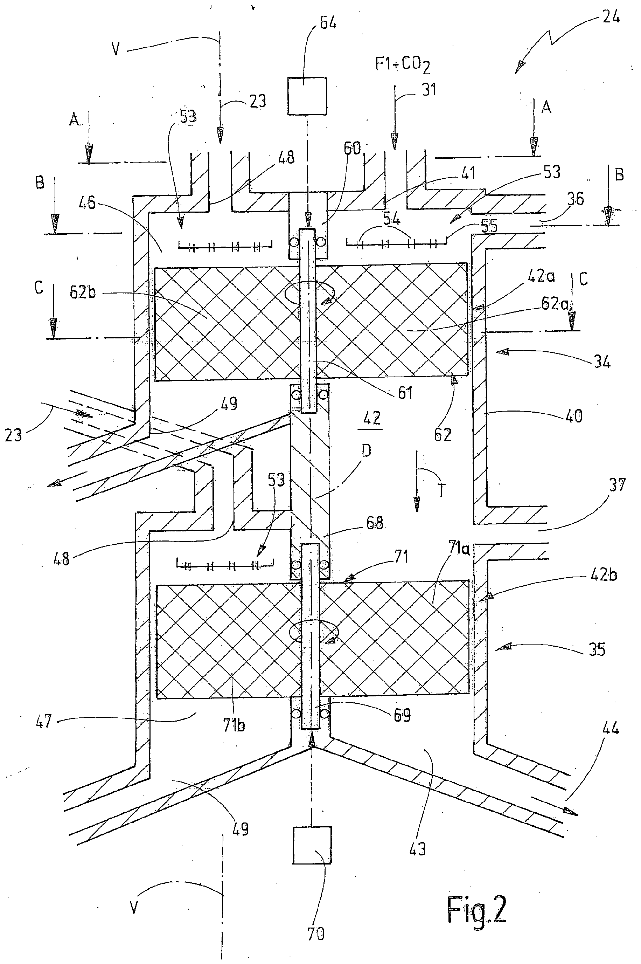

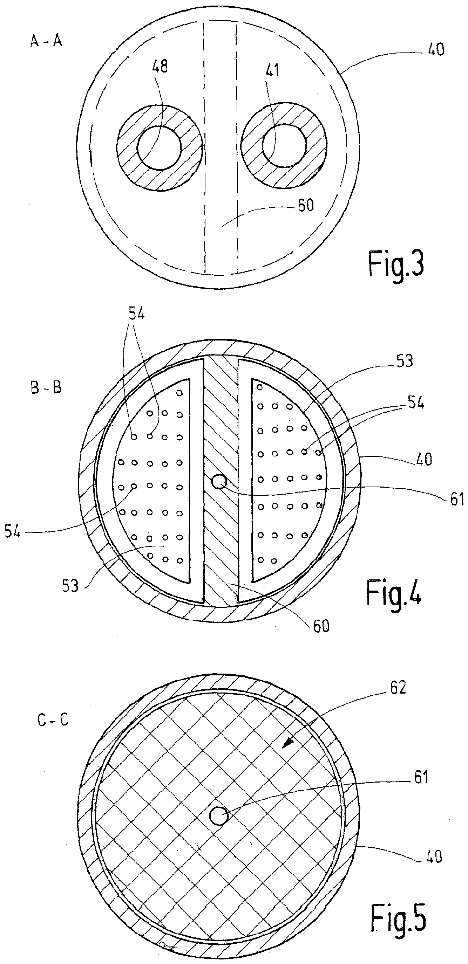

Ein bevorzugtes Ausführungsbeispiel der Kalziniervorrichtung 24 wird anhand der Figuren 2 bis 5 genauer erläutert. Die Kalziniervorrichtung 24 weist ein Gehäuse 40 auf. Im oberen Bereich des Gehäuses mündet die Zufuhrleitung 31 in eine Kanaleinlass 41, der in einen Abscheidekanal 42 im Inneren des Gehäuses 40 einmündet. Auf der dem Kanaleinlass 41 entgegengesetzten Seite des Gehäuses 40 befindet sich ein Kanalauslass 43, der den Abscheidenkanal 42 mit einer ersten Rückführleitung 44 verbindet, die von der Kalziniervorrichtung 24 zum Karbonator 27 führt und einen Strom des ersten Feststoffes F1 zurück zum Karbonator 27 führen kann. Der Abscheidekanal 42 erstreckt sich im Wesentlich in vertikal Richtung, so dass der erste Feststoff F1 hauptsächlich oder vollständig durch seine eigene Gewichtskraft durch den Abscheidekanal 42 transportiert wird.

Getrennt vom Abscheidekanal 42 sind ein erster Heizkanal 46 und ein zweiter Heizkanal 47 im Gehäuse 40 angeordnet. Jeder Heizkanal weist an seinem vertikal oberen Endbereich eine Eingangsöffnung 48 und an seinem entgegengesetzten unteren Endbereich eine Ausgangsöffnung 49 auf. Die beiden Heizkanäle 46, 47 sind voneinander getrennt. Die Eingangsöffnungen sind jeweils an die Versorgungsleitung 23 angeschlossen, wie dies in Figur 2 schematisch durch die Pfeile an den Eingangsöffnungen 48 veranschaulicht ist. Die Ausgangsöffnungen 49 sind an eine zweite Rückführleitung 50 angeschlossen, über die der aus der Kalziniervorrichtung 24 abgeführte zweite Feststoff F2 zurück zur Brennkammer 21 transportiert werden kann, um dort erneut aufgeheizt zu werden.

Unmittelbar im Anschluss an den Kanaleinlass 41 ist im Abscheidekanal 42 ein wannenförmiger Verteiler 53 angeordnet, der zur Verteilung des zugeführten kohlendioxidhaltigen ersten Feststoffs F1 in der Erstreckungsebene des Verteilers 53 dient. Der Verteiler 53 erstreckt sich beispielsgemäß im Wesentlichen horizontal und verteilt den ersten Feststoffpartikelstrom in etwa gleichmäßig über den Querschnitt des Abscheidekanals 42. Der Verteiler 53 kann hierfür fluidisiert werden und weist eine Vielzahl von verteilt angeordneten Überlauföffnungen 54 auf, durch die die Feststoffpartikel des ersten Feststoffes F1 hindurchfallen können. Die Feststoffpartikel können außerdem über einen seitlichen Rand 55 des Verteilers 53 weiter in den Abscheidekanal 42 transportiert werden. Derartige Verteiler 53 sind auch in den Heizkanälen 46, 47 im Anschluss an die jeweilige Eingangsöffnung 48 angeordnet.

Der erste Heizkanal 46 und der zweite Heizkanal 47 sind beispielsgemäß entlang einer gemeinsamen Achse V angeordnet, die vorzugsweise im Wesentlichen vertikal ausgerichtet ist. Beim bevorzugten Ausführungsbeispiel gemäß Figur 2 ist der erste Heizkanal 46 vertikal oberhalb des zweiten Heizkanals 47 vorgesehen. Die Ausgangsöffnung 49 des ersten Heizkanals 46 befindet sich oberhalb der Eingangsöffnung 48 des zweiten Heizkanals 47. Der erste Heizkanal 46 ist benachbart zu einem ersten Abschnitt 42a des Abscheidekanals angeordnet und der zweite Heizkanal 47 ist benachbart zu einem zweiten Abschnitt 42b des Abscheidekanals 42 angeordnet, wobei der zweite Abschnitt 42b des Abscheidekanals 42 sich in Transportrichtung T des ersten Feststoffes F1 durch den Abscheidekanal 42 an dessen ersten Abschnitt 42a anschließt. Die Transportrichtung T ist beim Ausführungsbeispiel vertikal.

In einer Trennwand 60 zwischen dem ersten Abschitt 42a des Abscheidekanals 42 und dem ersten Heizkanal 46 ist eine erste Welle 61 drehbar gelagert. An dieser ersten Welle 61 sitzt drehfest eine erste Wärmetauscherfläche 62 der ersten Wärmetauschereinheit 34. Die erste Wärmetauscherfläche 62 ragt mit einem Wärmeabgabeabschnitt 62a in den ersten Abschnitt 42a des Abscheidekanals 42 hinein, während der Wärmeaufnahmeabschnitt 62b der ersten Wärmetauscherfläche 62 in den ersten Heizkanal 46 hineinragt. Die erste Wärmetauscherfläche 62 ist unterhalb der Verteiler 53 des Abschneidekanals 42 bzw. des ersten Heizkanals 46 angeordnet. Über einen ersten Drehantrieb 64 der ersten Wärmetauschereinheit 34 ist die erste Welle 61 mit der ersten Wärmetauscherfläche 62 drehbar um eine Drehachse D angeordnet. Die Drehachse D verläuft im Wesentlichen vertikal und vorzugsweise parallel zur Achse V.

Im Gehäuse 40 ist außerdem die zweite Wärmetauschereinheit 35 angeordnet. Die zweite Wärmetauschereinheit 35 ist beim Ausführungsbeispiel analog zur ersten Wärmetauschereinheit 34 aufgebaut. Sie weist eine an einer Trennwand 68 zwischen dem zweiten Abschnitt 42b des Abscheidekanals und dem zweiten Heizkanal 47 drehbar angeordnete zweite Welle 69 auf, die über einen zweiten Drehantrieb 70 um die Drehachse D antreibbar ist. Auf der zweiten Welle 69 sitzt eine zweite Wärmetauscherfläche 71, die einen Wärmeabgabeabschnitt 71a aufweist, der in den zweiten Abschnitt 42b des Abscheidekanals 42 hineinragt, sowie einen Wärmeaufnahmeabschnitt 71b aufweist, der in den zweiten Heizkanal 47 hineinragt.

Jeder Wärmetauschereinheit 34, 35 ist ein Gasableitkanal 36, 37 zugeordnet, der in den Abscheidekanal 42 einmündet. Beim Ausführungsbeispiel mündet der erste Gasableitkanal 36 oberhalb der ersten Wärmetauscherfläche 62 in den ersten Abschnitt 42a des Ableitkanals 42 ein, wohingegen der zweite Gasableitkanal 37 oberhalb der zweiten Wärmetauscherfläche 71 in den zweiten Abschnitt 42b des Abscheidekanals 42 einmündet. Alternativ zu dieser Ausgestaltung könnten die Gasableitkanäle 36, 37 auch unterhalb der jeweiligen Wärmetauscherfläche 62, 71 in den zugeordneten Abschnitt 42a bzw. 42b des Abscheidekanals 42 einmünden.

Bei dem hier beschriebenen Ausführungsbeispiel können die beiden Wärmetauscherflächen 62, 71 unabhängig voneinander um die Drehachse D gedreht werden. Dies hat den Vorteil, dass unterschiedliche Temperaturzustände der beiden Wärmetauscherflächen 62, 71 berücksichtigt und daher die Drehstellung auch unabhängig voneinander verändert werden kann. Bei einer vereinfachten Ausführungsform ist es jedoch auch möglich, dass sich die Wärmetauschereinheiten 34, 35 einen gemeinsamen Drehantrieb 64 oder 70 teilen.

Die Kalziniervorrichtung 42 kann in Abwandlung zum beschriebenen Ausführungsbeispiel auch mehr als zwei Wärmetauschereinheiten 34, 35 und dementsprechend viele Heizkanäle 46, 47 aufweisen. Gemäß Figur 2 ist sie als zweistufige Kalziniervorrichtung 24 ausgeführt. Die Kalziniervorrichtung 24 arbeitet wie folgt:
Den beiden Heizkanälen 46, 47 wird ein Feststoffstrom des aufgeheizten zweiten Feststoffes F2, beispielsgemäß Sand, über die Versorgungsleitung 23 zugeführt. Die beiden Heizkanäle 46, 47 sind im Hinblick auf den Feststoffmassenstrom aus der Versorgungsleitung 23 parallel geschaltet. Die Feststoffpartikel des zweiten Feststoffes F2 treten an der jeweiligen Eingangsöffnung 48 in den Heizkanal 46 bzw. 47 ein und werden über den Verteiler 53 vorzugsweise gleichmäßig über den Querschnitt des jeweiligen Heizkanals 46, 47 verteilt. Durch die Gewichtskraft fallen die Feststoffpartikel des zweiten Feststoffes F2 durch den jeweiligen Heizkanal 46, 47 und rieseln dabei entlang des Wärmeaufnahmeabschnitts 62b bzw. 71b der ersten Wärmetauscherfläche 62 bzw. der zweiten Wärmetauscherfläche 71. Dabei geben sie ihre Wärme an den betreffenden Wärmeaufnahmeabschnitt 62b, 71b zumindest teilweise ab.

Gleichzeitig zum Aufheizvorgang der Wärmeaufnahmeabschnitte 62b und 71b geben die Wärmeabgabeabschnitte 62a und 71a der beiden Wärmetauscherflächen 62, 71 im Abscheidekanal ihre Wärme an den kohlendioxidhaltigen Feststoffstrom des ersten Feststoffes F1 ab. Die Feststoffpartikel des ersten Feststoffes F1 treten durch den Kanaleinlass 41 ein und werden durch den Verteiler 53 über den Querschnitt des Abscheidekanals 42 verteilt. Im Anschluss daran gelangen die Feststoffpartikel des ersten Feststoffes F1 zunächst in Kontakt mit dem Wärmeabgabeabschnitt 62 der ersten Wärmetauscherfläche 62 und nachfolgend mit dem Wärmeabgabeabschnitt 71a der zweiten Wärmetauscherfläche 71. Dabei werden die Partikel des ersten Feststoffes F1 erhitzt, wodurch sich das adsorbierte Kohlendioxid vom ersten Feststoff F1 ablöst und über die Gasableitkanäle 36 und 37 aus dem Gehäuse 40 der Kalziniervorrichtung 24 abgeführt wird. Durch das zweistufige Aufheizen des ersten Feststoffes F1 in einem gemeinsamen Gehäuse 40 wird auf geringem Raum mit hoher Effizienz Kohlendioxid von dem Feststoffpartikel des ersten Feststoffes F1 getrennt.

Nach einer vorgegebenen Zeit oder abhängig von einer gemessenen Temperatur des jeweiligen Wärmeabgabeabschnitts 42a, 71a der Wärmetauscherflächen 62, 71 werden diese durch den zugeordneten Drehantrieb 64 bzw. 70 um 180 Grad gedreht, so dass der kühlere Abschnitt nunmehr den Wärmeaufnahmeabschnitt 62b bzw. 71b im ersten Heizkanal 46 bzw. im zweiten Heizkanal 47 bildet und der heißere Abschnitt den Wärmeabgabeabschnitt 62a bzw. 71a im Abscheidekanal 42 bildet. Da die Abkühlung der beiden Wärmeabgabeabschnitte 62a und 71a voneinander verschieden ist, kann die Zeitdauer zwischen dem Drehen der Wärmetauscherfläche um 180 Grad der beiden Wärmetauschereinheiten 34, 35 unterschiedlich groß sein. Denn die Temperatur der Feststoffpartikel des ersten Feststoffes F1 ist bei Kontakt mit dem Wärmeabgabeabschnitt 62a der ersten Wärmetauscherfläche 62 kleiner als im Anschluss daran beim Kontakt mit dem Wärmeabgabeabschnitt 71a der zweiten Wärmetauscherfläche 71. Die Zykluszeit zwischen zwei 180 Grad-Drehungen kann bei der zweiten Wärmetauschereinheit 35 daher größer sein, als bei der ersten Wärmetauschereinheit 34. Da damit auch unterschiedliche Zeitdauern für das Aufheizen des jeweiligen Wärmeaufnahmeabschnitts 62b bzw. 71b zur Verfügung stehen, kann auch der Massenstrom in den ersten Heizkanal 46 und in den zweiten Heizkanal 47 unterschiedlich groß eingestellt werden. Hierfür können vor der jeweiligen Eingangsöffnung 48 in die Heizkanäle 46, 47 entsprechende Steuermittel wie Zellenradschleusen vorgesehen sein. Je größer die zur Verfügung stehende Zeitdauer für das Aufheizen des Wärmeaufnahmeabschnitts 62b bzw. 71b ist, desto kleiner kann die Menge des zweiten Feststoffes F2 durch den betreffenden Heizkanal 46, 47 eingestellt werden. Dadurch kann die Effizienz der Kalziniervorrichtung 24 bzw. der Vorrichtung 20 verbessert werden.

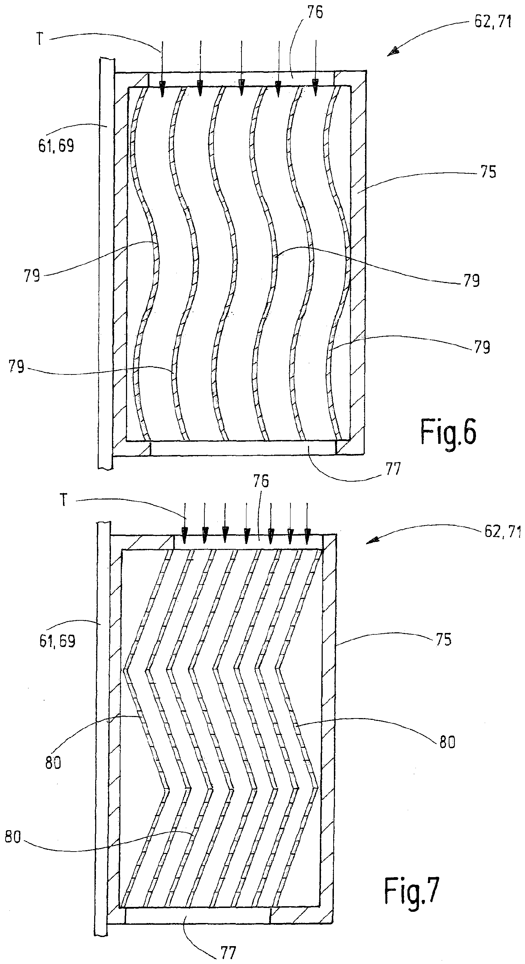

In den Figuren 6 bis 9 sind schematisch verschiedenen Ausführungsbeispiele für die erste Wärmetauscherfläche 62 bzw. die zweite Wärmetauscherfläche 71 teilweise schematisch veranschaulicht, wobei jeweils lediglich ein Abschnitt 62a, 62b, 71a, 71b dargestellt ist. Der jeweils andere Abschnitt der Wärmetauscherfläche 62, 71 ist gleichartig ausgestaltet. Bei dem hier dargestellten Ausführungsbeispielen weist die Wärmetauscherfläche 62, 71 ein Wärmetauschergehäuse 75 auf, das an seiner Oberseite eine obere Öffnung 76 und an seiner unteren Seite eine untere Öffnung 77 aufweist. Der jeweilige Feststoff F1, F2 kann durch die obere Öffnung 76 in Transportrichtung T in das Wärmetauschgehäuse 75 eindringen und an der entgegengesetzten unteren Öffnung 77 wieder aus dem Wärmetauschergehäuse 75 austreten. Die Verweildauer, während der sich die Feststoffpartikel innerhalb des Wärmetauschergehäuses 75 bewegen, kann durch die Ausgestaltung im Inneren des Wärmetauschergehäuses 75 variiert werden. Es ist insbesondere auch möglich, die Verweildauer der Wärmetauschereinheiten 34, 35 der Kalziniervorrichtung 24 durch verschiedene Ausgestaltungen der Wärmetauscherflächen 72, 71 unterschiedlich einzustellen.

Bei dem ersten Ausführungsbeispiel nach Figur 6 ist die Wärmetuascherfläche 62 bzw. 71 von mehreren parallel zueinander angeordneten gewellten Blechen oder Platten 79 gebildet. Die in Transportrichtung T durch das Wärmetauschergehäuse 75 hindurchfallenden oder rieselnden Feststoffpartikel werden dabei quer zur Transportrichtung T angelenkt, so dass die Verweildauer im Wärmetauschergehäuse 75 zunimmt. Entsprechend der gewünschten Verweildauer kann die Form bzw. Größe der Wellen, die Anzahl der Wellen und der Abstand benachbarter Platten 79 eingestellt werden.

Bei einem abgewandelten zweiten Ausführungsbeispiel gemäß Figur 7 sind anstelle von knickfrei gewellten Platten 79 abgewinkelte Bleche oder Platten 80 im Wärmetauschergehäuse 75 angeordnet, wobei auch hier die durch das Wärmetauschergehäuse 75 hindurchfallenden Feststoffpartikel quer zur Transportrichtung T abgelenkt werden, um die Verweildauer im Wärmetauschergehäuse 75 zu vergrößern und den Kontakt zwischen Feststoffpartikeln und Wärmetauscherfläche 62, 71 zu vergrößern.

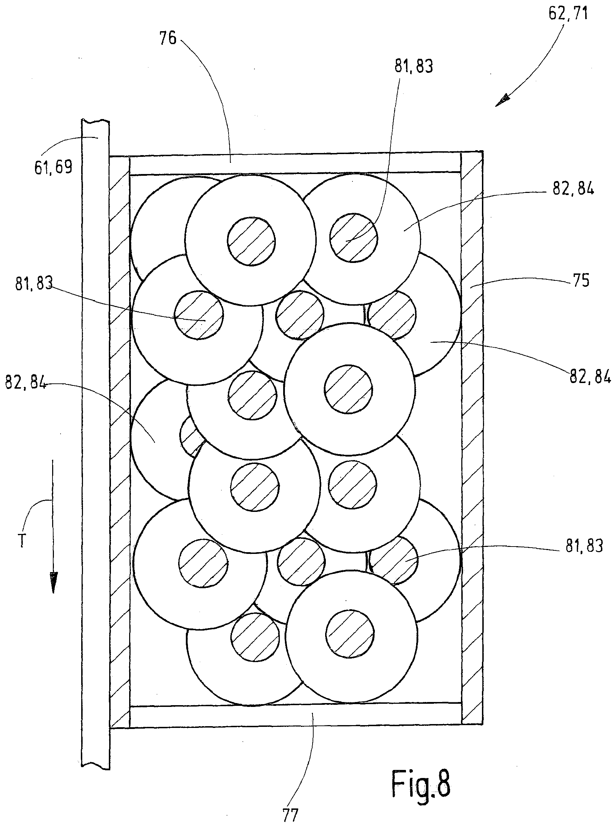

Bei einem in Figur 8 dargestellten dritten Ausführungsbeispiel sind im Wärmetauschergehäuse 75 eine Vielzahl von Füllkörpern 81 angeordnet, die den direkten ungehinderten Durchgang der Feststoffpartikel behindern. Die Füllkörper 81 weisen Abstandhaltemittel 82 auf, um zwischen den Füllkörpern 81 ausreichend Raum für das Hindurchrieseln oder Hindurchfallen der jeweiligen Feststoffpartikel des ersten Feststoffes F1 bzw. zweiten Feststoffes F2 freizulassen. Bei dem in Figur 8 dargestellten Ausführungsbeispiel sind die Füllkörper 81 durch Stäbe 83 gebildet, die von jeweils einer oder mehreren Ringen 84 vollständig umschlossen sind, die die Abstandhaltmittel 83 bilden. Die Ringe 84 sorgen dafür, dass die Stäbe einen ausreichenden Abstand zueinander aufweisen. Die Stäbe 83 verlaufen quer zur Transportsichtung T und können parallel zueinander ausgerichtet sein. Um ein Herausfallen der Füllkörper 81 aus dem Wärmetauschergehäuse 75 zu verhindern, kann zumindest die untere Öffnung 77 des Wärmetauschergehäuses 75 durch ein gitterartiges Element verschlossen sein, das in der Zeichnung nicht näher dargestellt ist.

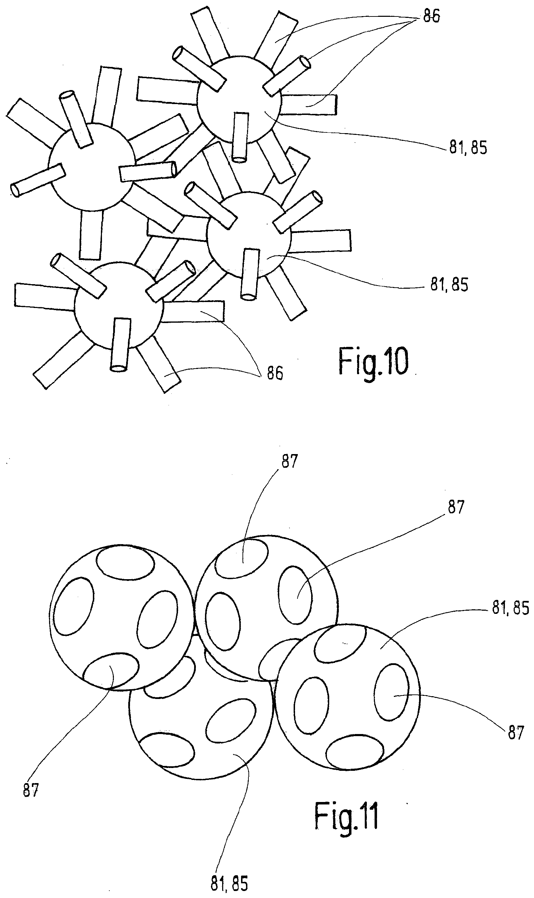

Anstelle der in Figur 8 dargestellten stabförmigen Füllkörper 81 können auch andere Füllkörper 81 verwendet werden, die in den Figuren 10 und 11 beispielhaft dargestellt sind. Gemäß der Ausführung nach Figur 10 sind die Füllkörper 81 von Kugeln 85 gebildet, von den in verschiedene Richtungen Stifte 86 wegragen, die die Abstandhaltemittel 82 bilden.

Bei einer weiteren alternativen Ausgestaltung der Füllkörper 81 nach Figur 11 sind die Füllkörper 81 durch Kugeln 85 gebildet, die jeweils ein oder mehrere Durchgangslöcher 87 aufweisen. Die Kugeln 85 liegen im Wärmetauschergehäuse 75 aneinander an, wobei die Feststoffpartikel durch die Durchgangslöcher 87 hindurch gelangen können.

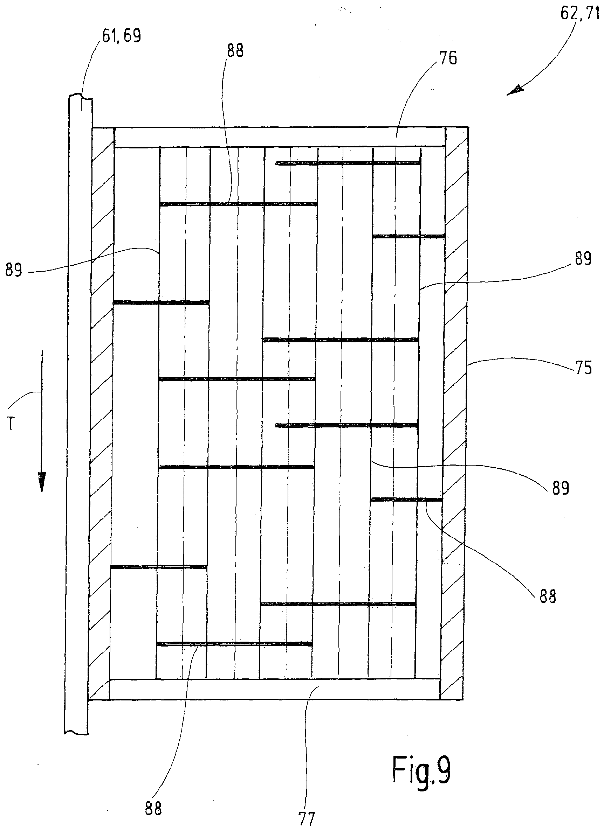

Eine weitere, vierte Ausgestaltungsform für die Wärmetauscherfläche 62, 71 ist in Figur 9 veranschaulicht. Dort ist im Inneren des Wärmetauschergehäuses 75 eine gitterartige Struktur mit quer zur Transportrichtung T zwischen der oberen Öffnung 76 und der unteren Öffnung 77 verlaufenden Querelementen 87 angeordnet. Die Querelemente 88 können beispielsweise eine stabförmige Gestalt mit beliebigen Querschnittsformen aufweisen. Die Querelemente 88 werden durch Halteteile 89 im Inneren des Wärmetauschergehäuses 75 gehalten. Die Halteteile 89 verlaufen im Wesentlichen in Transportrichtung T der Feststoffpartikel und können stab-oder plattenförmig ausgestaltet sein.

Es versteht sich, dass die im Zusammenhang mit den Figuren 6 bis 11 beschriebenen Ausführungsformen der Wärmetauscherflächen 62, 71 auch kombiniert werden können. Die Füllkörper 81 können über eine Struktur oder Halteteile 89 fest und unbeweglich gelagert sein. In diesem Fall kann in Abwandlung zu den dargestellten Ausführungsbeispielen auf das Wärmetauschergehäuse 75 auch verzichtet werden. Das Wärmetauschergehäuse 75 ist vor allem dann notwendig, wenn die Füllkörper 81 lose innerhalb des Wärmetauschergehäuses 75 angeordnet und lediglich durch das Wärmetauschergehäuse 75 gehalten werden.

Es versteht sich, dass die Abstandhaltemittel 82 alternativ zu den Ringen 84 oder den Stiften 86 auch durch Ringsegmente, Scheiben mit runder, ovaler oder polygonaler Kontur, quer vom Füllkörper 81 wegragende Vorsprünge oder dergleichen gebildet sein können. Hierbei stehen viele Möglichkeiten zur Verfügung. Alternativ zu den kugelförmigen Füllkörpern können auch andere Körper wie zum Beispiel Polyeder, hantelförmige Füllkörper 81, Ringkörper, röhrenförmige Körper oder dergleichen verwendet werden.

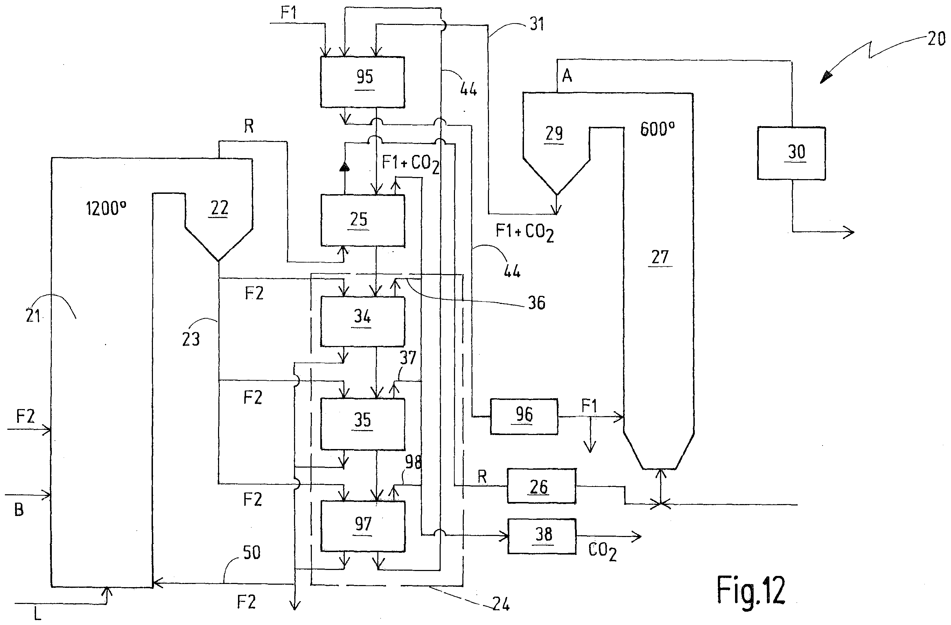

In Figur 12 ist ein abgewandeltes Ausführungsbeispiel der Vorrichtung 20 anhand eines Blockschaltbilds veranschaulicht. In Abwandlung zum ersten Ausführungsbeispiel gemäß Figur 1 ist dabei in die erste Rückführleitung 44 ein zusätzlicher regenerativer zweiter Wärmetauscher 95 zwischengeschaltet, der zum weiteren Abkühlen des zurück zum Karbonator 27 transportierten ersten Feststoffes F1 dient. Über diesen zusätzlichen Wärmetauscher 95 kann auch bei Bedarf eine zusätzliche Menge an erstem Feststoff F1 in den Kreislauf eingebracht werden. Eine zusätzliche Menge am zweiten Feststoff F2 kann über die Brennkammer 21 in den Kreislauf eingebracht werden, wenn dies erforderlich sein sollte. Der zusätzliche zweite Wärmetauscher 95 in Reihe geschaltet zu dem ersten Wärmetauscher 25. Über die beiden Wärmetauscher 95, 25 wird der kohlendioxidhaltige erste Feststoff F1 bereits vorgewärmt, bevor er in die Kalziniervorrichtung 24 eintritt. In der Rückführleitung 44 kann im Anschluss an den zusätzlichen Wärmetauscher 95 auch noch ein weiterer dritter Wärmetauscher 96 angeordnet sein, wenn der über die Rückführleitung 44 zurückgeführte und vom Kohlendioxid befreite erste Feststoff F1 weiter abgekühlt werden soll.

Ein weiterer Unterschied der zweiten Ausführungsform gemäß Figur 12 gegenüber dem ersten Ausführungsbeispiel besteht darin, dass die Kalziniervorrichtung 24 eine dritte Wärmetauschereinheit 97 aufweist, die in Reihe geschaltet ist zur ersten Wärmetauschereinheit 34 und der zweiten Wärmetauschereinheit 35. Der dritten Wärmetauschereinheit 97 ist ein dritter Heizkanal zugeordnet, der analog zu den beiden Heizkanälen 46, 47 gemäß Figur 2 ausführt sein kann und entlang der gemeinsamen Achse V neben einem dritten Abschnitt des Abscheidekanals 42 angeordnet ist. Der dritten Wärmetauschereinheit 97 ist ein dritter Gasableitkanal 98 analog zu den beiden anderen Wärmetaschereinheiten 34, 35 zugeordnet. Hinsichtlich der Funktionsweise der Vorrichtung 20 gemäß der zweiten Ausführungsform nach Figur 12 kann auf die Ausführung nach Figur 1 verwiesen werden.

Die Erfindung betrifft eine Kalziniervorrichtung 24 zur Abscheidung von Kohlendioxid aus einem rieselfähigen ersten Feststoff F1. Die Kalziniervorrichtung 24 weist ein Gehäuse 40 mit einem Abscheidekanal 42 auf. Getrennt vom Abscheidekanal 42 sind ein erster Heizkanal 46 und ein zweiter Heizkanal 47 vorgesehen. Im ersten Heizkanal 46 und im Abscheidekanal 42 ist eine erste Wärmetauschereinheit 34 und dem zweiten Heizkanal 47 und dem Abscheidekanal 42 eine zweite Wärmetauschereinheit 35 zugeordnet. Die beiden Wärmetauschereinheiten 34, 35 ragen jeweils mit einem Wärmeabgabeabschnitt 62a, 71a ihrer Wärmetauscherflächen 62, 71 in den Abscheidekanal 42 hinein, während ein Wärmeaufnahmeabschnitt 62b, 71b in den jeweils zugeordneten Heizkanal 46, 47 hineinragt. Die beiden Wärmetauscherflächen 62, 71 sind um eine vorzugsweise gemeinsame Drehachse D über einen jeweils zugeordneten Drehantrieb 64, 70 drehbar gelagert. Im Abscheidekanal wird ein kohlendioxidhaltiger erster Feststoff F1 erhitzt und das adsorbierte Kohlendioxid wird dadurch freigesetzt. Es wird über wenigstens einen Gasableitkanal 36, 37 aus dem Gehäuse 40 der Kalziniervorrichtung 24 abgeführt. Die Kalziniervorrichtung 24 kann Teil einer Vorrichtung 20 zur Trennung von Kohlendioxid aus einem Rauchgas R sein, wobei der erste Feststoff F1 zunächst in Kontakt mit dem Rauchgas R gebracht wird und das Kohlendioxid adsorbiert und anschließend in der Kalziniervorrichtung 24 wieder freigibt.

### Bezugszeichenliste:

- 20: Vorrichtung
- 21: Brennkammer
- 22: Abscheider
- 23: Versorgungsleitung
- 24: Kalziniervorrichtung
- 25: erster Wärmetauscher
- 26: Rauchgasreinigungseinheit
- 27: Karbonator
- 28: Leitung
- 29: Abscheider
- 30: Abgasreinigungseinheit
- 31: Zufuhrleitung

- 34: erste Wärmetauschereinheit
- 35: zweite Wärmetauschereinheit
- 36: erster Gasableitkanal
- 37: zweiter Gasableitkanal
- 38: Mittel

- 40: Gehäuse
- 41: Kanaleinlass
- 42: Abscheidekanal
- 42a: erster Abschnitt des Abscheidekanals
- 42b: zweiter Abschnitt des Abscheidekanals
- 43: Kanalauslass
- 44: erste Rückführleitung

- 46: erster Heizkanal
- 47: zweiter Heizkanal
- 48: Eingangsöffnung
- 49: Ausgangsöffnung
- 50: zweite Rückführleitung
- 53: Verteiler
- 54: Überlauföffnungen
- 55: Rand

- 60: Trennwand
- 61: erste Welle
- 62: erste Wärmetauscherfläche
- 62a: Wärmeabgabeabschnitt
- 62b: Wärmeaufnahmeabschnitt

- 64: erster Drehantrieb

- 68: Trennwand
- 69: zweite Welle
- 70: Drehantrieb
- 71: zweite Wärmetauscherfläche
- 71a: Wärmeabgabeabschnitt
- 71b: Wärmeaufnahmeabschnitt

- 75: Wärmetauschergehäuse
- 76: obere Öffnung
- 77: untere Öffnung

- 79: gewelltes Platte
- 80: gewinkelte Platte
- 81: Füllkörper
- 82: Abstandhaltemittel
- 83: Stab
- 84: Ringen
- 85: Kugel
- 86: Stift
- 87: Durchgangslöcher
- 88: Querelement
- 89: Halteteil

- 95: zweiter Wärmetauscher
- 96: dritter Wärmetauscher
- 97: dritte Wärmetauschereinheit
- 98: dritter Gasableitkanal

- A: kohlendioxidfreies Abgas
- B: Brennstoff
- D: Drehachse
- L: Luft
- F1: erster Feststoff
- F2: zweiter Feststoff
- R: Kohlendioxid enthaltendes Rauchgas
- T: Transportrichtung
- V: Achse

## Patentansprüche

1. Kalziniervorrichtung (24) zur Abscheidung von Kohlendioxid aus einem Kohlendioxid enthaltenden rieselfähigen ersten Feststoff (F1),
mit einem Gehäuse (40), das für den ersten Feststoff einen Abscheidekanal (42) zwischen einem Kanaleinlass (41) und einem Kanalauslass (43) aufweist,
mit einem im Gehäuse (40) vorhandenen ersten Heizkanal (46) für einen zweiten rieselfähigen Feststoff (F2) wobei der erste Heizkanal (46, 47) eine Eingangsöffnung (48) und eine Ausgangsöffnung (49) aufweist,
mit einer Wärmetauschereinheit (34),
und mit wenigstens einem Gasableitkanal (36, 37), der in den Abscheidekanal (42) einmündet und über den das bei Erwärmung des ersten Feststoffs (F1) frei werdende Kohlendioxid aus dem Gehäuse (40) abgeführt wird, **gekennzeichnet durch**:
einen im Gehäuse (40) vorhandenen zweiten Heizkanal (47) für den zweiten Feststoff (F2), wobei der zweite Heizkanal (47) eine Eingangsöffnung (48) und eine Ausgangsöffnung (49) aufweist,
eine Drehachse (D), um die die erste Wärmetauschereinheit (34) drehbar gelagert ist, wobei die erste Wärmetauschereinheit (34) eine erste Wärmetauscherfläche (62) aufweist, die mit einem Wärmeabgabeabschnitt (62a) in einen ersten Abschnitt (42a) des Abscheidekanals (42) und mit einem Wärmeaufnahmeabschnitt (62b) in den ersten Heizkanal (46) hineinragt,
eine drehbar gelagerte, eine zweite Wärmetauscherfläche (71) aufweisende zweite Wärmetauschereinheit (35), wobei die zweite Wärmetauscherfläche (71) mit einem Wärmeabgabeabschnitt (71a) in einen zweiten, näher am Kanalauslass angeordneten Abschnitt (42b) des Abscheidekanals (42) und mit einem Wärmeaufnahmeabschnitt (71b) in den zweiten Heizkanal (47) hineinragt, mit wenigstens einem Drehantrieb (64, 70) zur Drehung der ersten Wärmetauscherfläche (62) und der zweiten Wärmetauscherfläche (71), um den jeweils kühleren Abschnitt der Wärmetauscherfläche (62 bzw. 71) aus dem Abscheidekanal (42) in den betreffenden Heizkanal (46 bzw. 47) und den jeweils wärmeren Abschnitt der Wärmetauscherfläche (62 bzw. 71) aus dem betreffenden Heizkanal (46 bzw. 47) in den Abscheidekanal (42) zu bewegen.

2. Kalziniervorrichtung nach Anspruch 1,
**dadurch gekennzeichnet, dass** der Abscheidekanal (42) und/oder der erste Heizkanal (46) und/oder der zweite Heizkanal (47) im Wesentlichen vertikal verläuft.

3. Kalziniervorrichtung nach Anspruch 1 oder 2,
**dadurch gekennzeichnet, dass** die erste Wärmetauschereinheit (34) und die zweite Wärmetauschereinheit (35) um eine gemeinsame Drehachse (D) drehbar gelagert sind.

4. Kalziniervorrichtung nach einem der vorhergehenden Ansprüche,
**dadurch gekennzeichnet, dass** der erste Heizkanal (46) und der zweite Heizkanal (47) entlang einer gemeinsamen Achse (V) angeordnet sind, die insbesondere vertikal ausgerichtet ist.

5. Kalziniervorrichtung nach einem der vorhergehenden Ansprüche,
**dadurch gekennzeichnet, dass** die Wärmetauschereinheiten (34, 35) über jeweils einen Drehantrieb (64, 70) unabhängig voneinander um die Drehachse (D) drehbar sind.

6. Kalziniervorrichtung nach einem der vorhergehenden Ansprüche,
**dadurch gekennzeichnet, dass** die Drehachse (D) im Wesentlichen vertikal ausgerichtet ist.

7. Kalziniervorrichtung nach einem der vorhergehenden Ansprüche,
**dadurch gekennzeichnet, dass** die Wärmetauscherfläche (62, 71) zumindest teilweise durch die Oberfläche von Füllkörpern (81) der Wärmetauschereinheit (34, 35) gebildet ist.

8. Kalziniervorrichtung nach einem der vorhergehenden Ansprüche,
**dadurch gekennzeichnet, dass** als erster Feststoff (F1) ein erdalkalisches Sorbens dient.

9. Kalziniervorrichtung nach einem der vorhergehenden Ansprüche,
**dadurch gekennzeichnet, dass** als zweiter Feststoff (F2) Sand dient.

10. Vorrichtung (20) zur Trennung von Kohlendioxid aus einem Rauchgas (R),
mit einer Brennkammer (21), in der durch Verbrennung eines Brennstoffes (B) mit Luft (L) Kohlendioxid enthaltendes Rauchgas (R) entsteht, wobei durch die Wärme der Brennkammer (21) ein zweiter Feststoff (F2) erwärmt wird,
mit einem Karbonator (27), in dem ein erster Feststoff (F1) in Kontakt mit Kohlendioxid enthaltendem Rauchgas (R) gebracht wird, wodurch der erste Feststoff (F1) das Kohendioxid absorbiert,
mit einer Kalziniervorrichtung (24) nach einem der vorhergehenden Ansprüche,
mit einer Zufuhrleitung (31) vom Karbonator (27) zu einem Abscheidekanal (42) der Kalziniervorrichtung (24), wobei die beiden Heizkanäle (46, 47) an eine gemeinsame Versorgungsleitung (23) angeschlossen sind, über die der erhitzte zweite Feststoff (F2) von der Brennklammer (21) zugeführt wird,
und mit wenigstens einem Gasabfuhrkanal (36, 37), der in den Abscheidekanal (42) der Kalziniervorrichtung (24) einmündet und über den das bei Erwärmung des ersten Feststoffs (F1) frei werdende Kohlendioxid aus dem Gehäuse (40) der Kalziniervorrichtung (24) abgeführt wird.

## Claims

1. Calcination device (24) for separating carbon dioxide from a pourable first solid (F1) containing carbon dioxide,
with a housing (40) which has a separating channel (42) for the first solid between a channel inlet (41) and a channel outlet (43),
with a first heating channel (46) present in the housing (40) for a second pourable solid (F2), wherein the first heating channel (46, 47) has an inlet opening (48) and an outlet opening (49),
with a heat exchanger unit (34),
and with at least one gas discharge channel (36, 37) which opens into the separating channel (42) and via which the carbon dioxide released on heating of the first solid (F1) is dissipated from the housing (40),
**characterised by**
a second heating channel (47) present in the housing (40) for the second solid (F2), wherein the second heating channel (47) has an inlet opening (48) and an outlet opening (49),
a rotation axis (D) about which the first heat exchanger unit (34) is mounted rotatably, wherein the first heat exchanger unit (34) has a first heat exchange surface (62) which protrudes with a heat emission portion (62a) into a first portion (42a) of the separating channel (42), and protrudes with a heat receiving portion (62b) into the first heating channel (46),
a rotatably mounted second heat exchanger unit (35) having a second heat exchange surface (71), wherein the second heat exchange surface (71) protrudes with a heat emission portion (71a) into a second portion (42b) of the separating channel (42) arranged closer to the channel outlet, and protrudes with a heat receiving portion (71 b) into the second heating channel (47),
with at least one rotary drive (64, 70) for rotation of the first heat exchange surface (62) and the second heat exchange surface (71) in order to move the respectively cooler portion of the heat exchange surface (62 or 71) out of the separating channel (42) into the respective heating channel (46 or 47), and to move the respectively warmer portion of the heat exchange surface (62 or 71) out of the respective heating channel (46 or 47) into the separating channel (42).

2. Calcination device according to claim 1, **characterised in that** the separating channel (42) and/or the first heating channel (46) and/or the second heating channel (47) run(s) substantially vertically.

3. Calcination device according to claim 1 or 2, **characterised in that** the first heat exchanger unit (34) and the second heat exchanger unit (35) are mounted rotatably about a common rotation axis (D).

4. Calcination device according to any of the preceding claims, **characterised in that** the first heating channel (46) and the second heating channel (47) are arranged along a common axis (V) which in particular is oriented vertically.

5. Calcination device according to any of the preceding claims, **characterised in that** the heat exchanger units (34, 35) are each rotatable about the rotation axis (D) independently of each other via a rotary drive (64, 70).

6. Calcination device according to any of the preceding claims, **characterised in that** the rotation axis (D) is oriented substantially vertically.

7. Calcination device according to any of the preceding claims, **characterised in that** the heat exchange surface (62, 71) is at least partially formed by the surface of filling bodies (81) of the heat exchanger unit (34, 35).

8. Calcination device according to any of the preceding claims, **characterised in that** an earth-alkali sorbent serves as the first solid (F1).

9. Calcination device according to any of the preceding claims, **characterised in that** sand serves as the second solid (F2).

10. Device (20) for separating carbon dioxide from a flue gas (R),
with a combustion chamber (21) in which flue gas (R) containing carbon dioxide is produced by combustion of a fuel (B) with air (L), wherein a second solid (F2) is heated by the heat from the combustion chamber (21),
with a carbonator (27) in which a first solid (F1) is brought into contact with flue gas (R) containing carbon dioxide, whereby the first solid (F) absorbs the carbon dioxide,
with a calcination device (24) according to any of the preceding claims,
with a supply line (31) from the carbonator (27) to a separating channel (42) of the calcination device (24), wherein the two heating channels (46, 47) are connected to a common supply line (23) via which the heated second solid (F2) from the combustion chamber (21) is supplied,
and with at least one gas discharge channel (36, 37) which opens into the separating channel (42) of the calcination device (24) and via which the carbon dioxide released on heating of the first solid (F1) is dissipated from the housing (40) of the calcination device (24).

## Revendications

1. Dispositif de calcination (24) permettant de séparer du dioxyde de carbone d'une première matière solide (F1) susceptible de s'écouler, contenant du dioxyde de carbone,
comprenant une enceinte (40) qui présente pour la première matière solide un conduit de séparation (42) entre une entrée de conduit (41) et une sortie de conduit (43),
comprenant un premier conduit de chauffage (46), prévu dans l'enceinte (40), pour une deuxième matière solide (F2) susceptible de s'écouler, le premier conduit de chauffage (46, 47) présentant une ouverture d'entrée (48) et une ouverture de sortie (49),
comprenant une unité d'échangeur de chaleur (34),
et comprenant au moins un conduit d'évacuation de gaz (36, 37) qui débouche dans le conduit de séparation (42) et par l'intermédiaire duquel le dioxyde de carbone dégagé lors du chauffage de la première matière solide (F1) est évacué de l'enceinte (40),
**caractérisé en ce qu'**il comporte
un deuxième conduit de chauffage (47), prévu dans l'enceinte (40), pour la deuxième matière solide (F2), le deuxième conduit de chauffage (47) présentant une ouverture d'entrée (48) et une ouverture de sortie (49),
un axe de rotation (D) autour duquel la première unité d'échangeur de chaleur (34) est montée avec possibilité de rotation, la première unité d'échangeur de chaleur (34) présentant une première surface d'échangeur de chaleur (62) qui avance avec une partie d'émission de chaleur (62a) dans un premier tronçon (42a) du conduit de séparation (42) et avec une partie d'absorption de chaleur (62b) dans le premier conduit de chauffage (46),
une deuxième unité d'échangeur de chaleur (35) montée avec possibilité de rotation et présentant une deuxième surface d'échangeur de chaleur (71), la deuxième surface d'échangeur de chaleur (71) avançant avec une partie de restitution de chaleur (71 a) dans un deuxième tronçon (42b) du conduit de séparation (42), plus proche de la sortie de conduit, et avec une partie d'absorption de chaleur (71b) dans le deuxième conduit de chauffage (47),
comprenant au moins un moyen d'entraînement en rotation (64, 70) destiné à la mise en rotation de la première surface d'échangeur de chaleur (62) et de la deuxième surface d'échangeur de chaleur (71), afin de déplacer la partie respectivement plus froide de la surface d'échangeur de chaleur (62 ou 71) du conduit de séparation (42) dans le conduit de chauffage concerné (46 ou 47) et amener la partie respectivement plus chaude de la surface d'échangeur de chaleur (62 ou 71) du conduit de chauffage concerné (46 ou 47) dans le conduit de séparation (42).

2. Dispositif de calcination selon la revendication 1, **caractérisé en ce que** le conduit de séparation (42) et/ou le premier conduit de chauffage (46) et/ou le deuxième conduit de chauffage (47) s'étendent sensiblement verticalement.

3. Dispositif de calcination selon la revendication 1 ou 2, **caractérisé en ce que** la première unité d'échangeur de chaleur (34) et la deuxième unité d'échangeur de chaleur (35) sont montées avec possibilité de rotation autour d'un axe de rotation (D) commun.

4. Dispositif de calcination selon l'une des revendications précédentes, **caractérisé en ce que** le premier conduit de chauffage (46) et le deuxième conduit de chauffage (47) sont disposés le long d'un axe (V) commun qui est orienté notamment verticalement.

5. Dispositif de calcination selon l'une des revendications précédentes, **caractérisé en ce que** les unités d'échangeur de chaleur ((34, 35) peuvent être mises en rotation autour de l'axe de rotation (D), indépendamment l'une de l'autre, respectivement par l'intermédiaire d'un moyen d'entraînement en rotation (64, 70).

6. Dispositif de calcination selon l'une des revendications précédentes, **caractérisé en ce que** l'axe de rotation (D) est orienté sensiblement verticalement.

7. Dispositif de calcination selon l'une des revendications précédentes, **caractérisé en ce que** la surface d'échangeur de chaleur (62, 71) est formée au moins en partie par la surface de corps de remplissage (81) de l'unité d'échangeur de chaleur (34, 35).

8. Dispositif de calcination selon l'une des revendications précédentes, **caractérisé en ce que** l'on utilise un sorbant alcalino-terreux en tant que première matière solide (F1).

9. Dispositif de calcination selon l'une des revendications précédentes, **caractérisé en ce que** l'on utilise du sable en tant que deuxième matière solide (F2).

10. Dispositif (20) permettant de séparer du dioxyde de carbone d'un gaz de fumée (R),
comprenant une chambre de combustion (21) dans laquelle un gaz de fumée (R), contenant du dioxyde de carbone, est formé par combustion d'un combustible (B) avec de l'air (L), une deuxième matière solide (F2) étant chauffée par la chaleur de la chambre de combustion (21),
comprenant un carbonateur (27) dans lequel une première matière solide (F1) est mise en contact avec du gaz de fumée (R) contenant du dioxyde de carbone, à la suite de quoi la première matière solide (F1) absorbe le dioxyde de carbone,
comprenant un dispositif de calcination (24) selon l'une des revendications précédentes,
comprenant une conduite d'amenée (31) du carbonateur (27) à un conduit de séparation (42) du dispositif de calcination (24), les deux conduits de chauffage (46, 47) étant raccordés à une conduite d'alimentation (23) commune, par l'intermédiaire de laquelle la deuxième matière solide (F2) chauffée est amenée depuis la chambre de combustion (21),
et comprenant au moins un conduit d'évacuation de gaz (36, 37) qui débouche dans le conduit de séparation (42) du dispositif de calcination (24) et par l'intermédiaire duquel le dioxyde de carbone dégagé lors du chauffage de la première matière solide (F1) est évacué de l'enceinte (40) du dispositif de calcination (24).
